# EUROPÄISCHE PATENTANMELDUNG

(11) **EP 0 625 444 A1**
(43) Veröffentlichungstag der Anmeldung: **23.11.1994**
(21) Anmeldenummer: 94107467.6
(22) Anmeldetag: 13.05.1994
(51) Int. Cl.: B60N 2/30

(54) **Integrierter Kindersitz für Kraftfahrzeuge**

(30) Priorität: 17.05.1993 DE 4316404
(71) Anmelder: NAUE/JOHNSON CONTROLS VERWALTUNGS-GmbH, D-42929 Wermelskirchen (DE)
(72) Erfinder: Tritschler, Klaus, D-42285 Wuppertal (DE); Meyer, Harald, D-51063 Köln (DE)
(74) Vertreter: Bergen, Klaus, Dipl.-Ing.

(57) **Zusammenfassung**

Damit zum Herrichten von Kindersitzen (1), die durch Verlagern von Teilen der hinteren Sitzbank (5) von Personen-Kraftfahrzeugen eingerichtet werden können, keine losen Teile erforderlich sind bzw. beim Einrichten keine solche anfallen und ein sicher plazierter sowie gut abgepolsterter Kindersitz (1) garantiert ist, wird ein vorderes Polsterteil (7) des geteilten Sitzes (2) um eine Fuge (11) des Überzuges (9) nach hinten auf den hinteren Polsterteil (8) geklappt, wobei der Sicherheitsgurt für Erwachsene auch für Kinder Verwendung findet.

## Beschreibung

Es ist bekannt, in die Rücksitzbank für ein Kraftfahrzeug einen Sitzteil so einzusetzen, daß zur Benutzung für Erwachsene eine normale, durchgehende Sitzfläche vorliegt und zur Schaffung eines Kindersitzes ein hierzu passender, als Teil der Sitzbank in ihrem vorderen Bereich in diese eingesetzter und herausnehmbarer Sitzteil auf der Sitzbank plaziert, Verwendung findet, wobei der freiwerdende Bereich der Sitzbank (DE-PS 30 20 212) zur Aufnahme der Beine des Kindes dient.

Außerdem wird auf gleicher Breitenlage mit diesem Sitzteil ein Bereich der Rückenlehne der Sitzbank etwa als obere Hälfte heraus- und zur Auflage auf der hinteren Hutablage der Sitzbank umgeklappt und die untere Hälfte auf den hinteren verbleibenden Teil der Sitzbank geklappt. Hierdurch steht dem Kind eine erhöht liegende Sitzfläche und ein vertieft liegender Lehnenbereich zur Verfügung, wobei ein Sicherheitsgurt zum Halt der Sitzfläche für das Kind Verwendung findet.

Nachteilig hierbei ist, daß sowohl der auf der Hutablage befindliche obere Teil der Rückenlehne dort die Ablagemöglichkeit für Gepäckteile oder dgl. beeinträchtigt, wobei bei bereits belegter Hutablage ein Umklappen auf diese nicht möglich ist, als auch, daß der verbleibende Teil der Rückenlehne eine nur dünne Polsterstärke aufweist, was für längere Fahrtzeiten unangenehm ist und im Crashfall eine zu gering schonende Polsterung vorhanden ist. Außerdem ist es problematisch, daß das herausgenommene Sitzteil als loses Teil vorliegt, verloren, entwendet oder verlegt werden kann und so bei Bedarf oft nicht zur Verfügung steht. Sein Halt auf der Sitzbank ist in der Längs- und Breitenrichtung für hohe Belastungen nicht ausreichend festgelegt.

Der Erfindung liegt das Problem zugrunde, unter Vermeidung der vorstehenden Nachteile, eine derartige Sitzbankausführung zu schaffen, bei der keine Losteile benötigt werden und eine volle Polsterung der Sitzfläche und der Lehne für das Sitzen und Anlehnen des Kindes zur Verfügung steht, sowie der normale Dreipunkt-Sicherheitsgurt auch zum Anschnallen des Kindes benutzbar ist, wobei die Anordnung der Teile des geschaffenen Kindersitzes einen festen Halt zum Fahrzeug aufweisen. Außerdem soll als Wunschausführung hierzu ein seitlicher gepolsterter Halt für das Kind vorliegen.

Dieses Problem wird im wesentlichen mit den Merkmalen des kennzeichnenden Teils des Anspruchs 1 gelöst.

Durch die erfindungsgemäße Ausgestaltung des von der normalen Sitzbank einzurichtenden Kindersitzes nur durch Teile derselben ergibt den Vorteil, daß die Einrichtung zum Kindersitz jederzeit möglich ist, Teile hierzu nie fehlen bzw. verlorengegangen sind, wobei ein hoher Sitzkomfort für das Kind durch Aufsitzen und Anlehnen auf bzw. an starken Polsterungen vorliegt und ein angenehmer Freiraum für seine Beine und Füße vorhanden ist. Der Halt ist durch die feste Position des umgeklappten vorderen Polsterteils voll erreicht, und durch die Verwendung des normalen soliden Sicherheitsgurtes ist ein voller Schutz gewährleistet. Außerdem tritt keine Verschmutzung von zum Sitzen der Erwachsenen benötigten Polsterpartien durch Aufsetzen der Schuhe des Kindes an.

In der Zeichnung ist ein Ausführungsbeispiel der Erfindung schematisch dargestellt. Es zeigen:
- Fig. 1: eine Seitenansicht auf den Erfindungsgegenstand in einer Sitzbankposition für Erwachsene,
- Fig. 2: einen Querschnitt gemäß der Linie A-B nach Fig. 1,
- Fig. 3: einen Längsschnitt gemäß Fig. 1, jedoch in zum Kindersitz eingerichteter Position.

Eine hintere Sitzbank 1 für Personen-Kraftfahrzeuge weist mehrere Sitzplätze für Heranwachsende und Erwachsene 6 auf, je nach Fahrzeugausstattung zwei oder drei. Ein solcher Erwachsenensitzplatz 5 besteht im wesentlichen aus einem Sitzteil 2, einer Lehne 3, einem Untergestell 4, sowie zugehörigen Sicherheitsgurten und Kopfstützen.

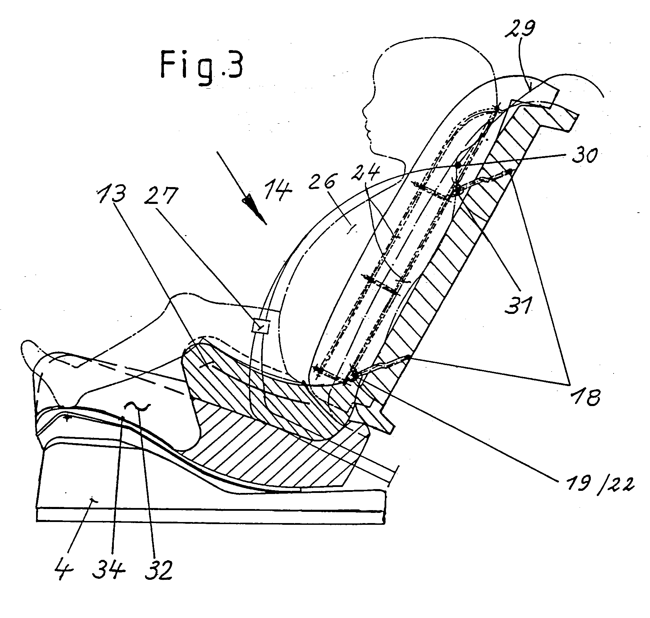

Das Sitzteil 2 ist durch die Trennflächen 12 in einem vorderen Polsterteil 7 und einem hinteren Polsterteil 8 geteilt ausgeführt, wobei ein Überzug 9 auf einer Oberseite 10 in einer Fuge 11 als Scharnier zum Verschwenken etwa um 180° des vorderen Polsterteils 7 auf das hintere Polsterteil 8 in eine Kindersitzposition 13 benutzt wird, siehe Fig. 3. Daher weist das vordere Polsterteil 7 auch auf einer Unterseite 28 eine Sitzpolsterschicht auf oder es ist insgesamt aus einem Polstermaterial hergestellt, wie es bei einem durchgehenden Schaumstoff der Fall ist, wobei in jedem Fall diese Unterseite mit einem Überzug versehen ist. Hierdurch dient das vordere Polsterteil 7 als Kindersitzteil für einen Kindersitz 14 und es wird ihm hierbei eine sichere Halteposition verliehen, die durch eine besonders stabile Ausbildung des Überzuges 9 im Bereich der Fuge 11 noch verstärkt werden kann.

Der durch das Wegklappen freiwerdende Raum 32 bietet in Verbindung mit der nun erhöht liegenden Sitzauflage den Füßen und Unterschenkeln des aufsitzenden Kindes 26 ausreichend Platz. Der Boden 33 ist mit einer dünnen Matte 34 gegen das Untergestell abgedeckt.

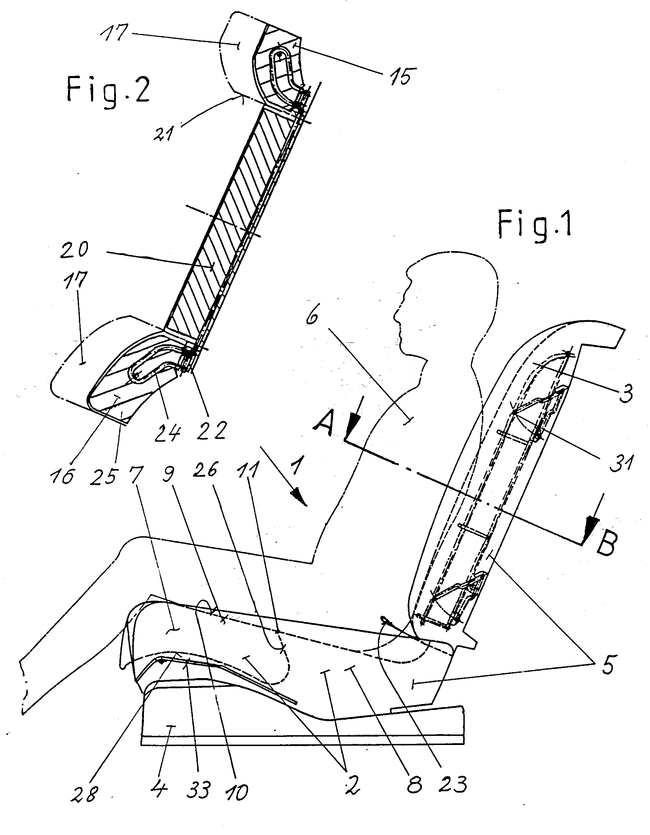

Die nicht wesentlich bei der Einstellung zum Erwachsenensitzplatz 5 einen Lehnenmittelteil 20 gegenüber vorstehenden Seitenteile 15 und 16 sind in besonderer Ausgestaltung der Erfindung dem Lehnenmittelteil 20 gegenüber als lose Teile ausgeführt und werden zur Kindersitzposition 13 in eine strichpunktiert in Fig. 2 gezeichnete Stützposition 17 nach vorn verlagert, wobei ihre dem Lehnenmittelteil 20 gegenüber nun vorstehnden Seitenflächen 21 dem aufsitzenden Kind 26 einen guten Halt verleihen, siehe auch Fig. 3. Dies wird dadurch ermöglicht, daß die Seitenteile 15 und 16 um in dem Lehnenmittelteil 20 oben und unten schwenkbar angeordneten zwei Kurbelwellen 18 außen um deren Kurbelzapfen 19 gelagert sind, wodurch sich ein parallelogrammartiger Anschluß ergibt. An Lagerhülsen 22, die auf den Kurbelzapfen 19 lagern, sind Metallrahmen 24 der Seitenteile 15 und 16 angeschlossen, um die die Polsterungen 25 der Seitenteile 15 und 16 angeordnet sind, wodurch sie ihren erforderlichen festen Anschluß erfahren.

Zur Arretierung der Seitenteile 15 und 16 in der Stützposition 17 ist mit der Kurbelwelle 18 eine bekannte, nicht dargestellte selbsttätig einrastende Sperreinrichtung gekuppelt. Hierbei kann so vorgegangen werden, daß sowohl nur die Endlage oder auch Unterteilungen des Nachvornbringweges der Seitenteile 15 und 16 arretiert werden als auch, daß Zwischenraststellungen ermöglicht werden. Diese können entweder nur unter einer begrenzten Haltekraft wirksam werden, so daß die Seitenteile 15 und 16 durch Ziehen oder Drücken an ihnen wunschgemäß zu verlagern sind oder, daß die Stellungen gegen Zurückverlagerung durch feste Einrastungen arretiert werden und zum Zurückbringen der Seitenteile 15 und 16 diese Arretierung durch eine besondere Ausrastung aufgehoben werden muß. Zum bequemen Nachvornbringen dient eine vom Benutzer erfaßbare Schlaufe 23.

Das Seitenteil 16 ist breiter als das Seitenteil 15 ausgeführt, was mit dem Gesamtaufbau oder dem Design der Sitzbank 1 im Zusammenhang steht.

Falls sich der Kindersitz 14 an der Außenseite einer Sitzbank 1 befindet und bereits an der anschließenden Fahrzeuginnenwand eine Polsterung vorhanden ist, genügt es, daß nur an der der Fahrzeuginnenwand entgegengesetzten Seite des eingerichteten Kindersitzes 14 ein Seitenteil 15 bzw. 16 vorgesehen ist.

Ein Sicherheitsgurt 27 für den Erwachsenensitzplatz 5 ist auch für den einzustellenden Kindersitz 14 verwendbar, lediglich ist zur Anpassung an die beim Kind 26 tiefer liegende Hals- und Brustpartie der Sicherheitsgurt 27 in seinem oberen Bereich 29 in einen Haken 30 zur entsprechenden Umlenkung als tieferer Abgang einzubringen und gegebenenfalls ist die gesamte Länge des Sicherheitsgurtes 27 auf das Bedürfnis des Kindes passend einzustellen.

## Patentansprüche

1. Integrierter Kindersitz für Kraftfahrzeuge, der durch verlagerte Teilbereiche eines Erwachsenensitzplatzes einer Sitzbank gebildet wird, dadurch gekennzeichnet, daß ein Sitzteil (2) eines Erwachsenensitzplatzes (5) in ein vorderes Polsterteil (7) und ein hinteres Polsterteil (8) zweigeteilt ist, wobei diese durch eine Fuge (11) eines Überzuges (9) verbunden und das vordere Polsterteil (7) um diese etwa um 180° auf das hintere Polsterteil (8) verschwenkbar ist sowie eine Unterseite (28) des vorderen Polsterteils (7) eine Polsterschicht aufweist oder das vordere Polsterteil (7) durchgehend aus Polstermaterial besteht und die Unterseite (28) durch einen Überzug (9) abgedeckt ist.

2. Integrierter Kindersitz für Kraftfahrzeuge nach Anspruch 1, dadurch gekennzeichnet, daß entweder beidseitig Seitenteile (15, 16) oder bei gepolsterter Fahrzeuginnenwand nur das auf der entgegengesetzten Sitzseite befindliche Seitenteil (15, 16) getrennt von dem Lehnenmittelteil (20) der Lehne (3) ausgeführt ist und in eine dem Lehnenmittelteil (20) gegenüber vorstehende Stützposition (17) gebracht werden kann und in dieser oder in Zwischenpositionen arretiert ist.

3. Integrierter Kindersitz für Kraftfahrzeuge nach den Ansprüchen 1 und 2, dadurch gekennzeichnet, daß die losen Seitenteile (15, 16) an im oberen und unteren Bereich des Lehnenmittelteils (20) gelagerten Kurbelwellen (18) derart gelagert sind, daß Kurbelzapfen (19) bei der Einstellung zum Erwachsenensitzplatz (5) etwa in Längsrichtung der Lehne (3) unterhalb der Kurbelwelle (18) liegen und sie zur Einnahme der Stützposition (17) der Seitenteile (15, 16) nach vorn in eine Position (31) verschwenkend verlagert werden, wobei diese Position (31) oder auch zusätzlich Zwischenpositionen durch federnd einrastende Arretierungen überwindbar gehaltert werden oder fest wirkende Sperreinrichtungen sind mit mindestens einer Kurbelwelle (18) gekuppelt, die zum Zurückverlagern der Seitenteile (15, 16) auszurasten sind.

4. Integrierter Kindersitz für Kraftfahrzeuge nach Anspruch 1 und folgenden, dadurch gekennzeichnet, daß zum Tieferlegen des Abganges des oberen Bereiches (29) eines Dreipunkt-Sicherheitsgurtes (27) ein Haken (30) zum Einhängen desselben in der gewünschten Höhenlage des Abganges vorgesehen ist.

5. Integrierter Kindersitz für Kraftfahrzeuge nach Anspruch 1, dadurch gekennzeichnet, daß auf dem Boden (33) im Bereich des vorderen Polsterteils (7) eine Matte (34) aufgebracht ist.
